# FASCICULE DE BREVET EUROPEEN

(11) **EP 3 689 755 B1**
(45) Date de publication et mention de la délivrance du brevet: **27.01.2021**
(21) Numéro de dépôt: 19214091.1
(22) Date de dépôt: 06.12.2019
(51) Int. Cl.: B64D 47/08, B64D 47/04, B64D 43/00, B64D 45/08

(54) **SYSTEME D'ECLAIRAGE DIRECTIONNEL EQUIPANT UN AERONEF ET PROCEDE D'ECLAIRAGE ASSOCIE**
RICHTUNGBELEUCHTUNGSSYSTEM EINES LUFTFAHRZEUGS, UND ENTSPRECHENDES BELEUCHTUNGSVERFAHREN
DIRECTIONAL LIGHTING SYSTEM PROVIDED IN AN AIRCRAFT AND ASSOCIATED LIGHTING METHOD

(30) Priorité: 31.01.2019 FR 1900910
(43) Date de publication de la demande: 05.08.2020
(73) Titulaire: Airbus Helicopters, 13725 Marignane Cedex (FR)
(72) Inventeur: Salesse-Lavergne, Marc, 13190 Allauch (FR)
(74) Mandataire: GPI Brevets

(56) Documents cités:
- WO-A1-2018/035835
- FR-A3- 3 037 042
- US-A- 3 721 499
- US-A1- 2018 009 546

## Description

La présente invention concerne un système et un procédé pour réaliser un éclairage directionnel depuis un aéronef. Un tel aéronef peut notamment consister en un avion, un giravion ou tout type d'aéronef préférentiellement à décollage et/ou atterrissage vertical.

En outre, de tels aéronefs peuvent avantageusement embarquer à leur bord un ou des pilote(s) et/ou des passagers et/ou des marchandises.

Plus particulièrement, l'invention se rapporte au domaine des systèmes d'éclairage comportant une source lumineuse montée sur un support motorisé présentant au moins un degré de mobilité en rotation par rapport à un fuselage de l'aéronef et au moins un dispositif de commande permettant de commander le support motorisé selon au moins une orientation angulaire, la (ou les) orientation(s) angulaire(s) étant relative(s) à une direction de visée de la source lumineuse dans un premier référentiel lié au fuselage de l'aéronef.

De façon générale, et tels que décrits dans les documents FR 3 037 042 et US 3721 499, il est connu de réaliser des dispositifs de poursuite automatique de l'éclairage d'un site ponctuel de décollage ou d'atterrissage pour giravion. Dans ce cas, un tel site ponctuel peut être formé par une zone de posé agencée au sol ou dans un repère fixe par rapport au sol.

En outre, ce document FR 3 037 042 divulgue également l'utilisation d'un système de mesure de l'altitude et du cap du giravion, d'un accéléromètre deux axes, d'un radioaltimètre de manière à connaitre les variations de positions du giravion par rapport au site ponctuel de coordonnées fixes dans un référentiel lié au sol.

Ainsi, un tel dispositif de poursuite oblige le pilote à réaliser une première étape d'initialisation de la position d'un phare pour l'orienter en direction du site ponctuel puis une étape de mémorisation de manière à mémoriser la position initiale du phare.

Par conséquent, un tel dispositif ne permet pas de réaliser une poursuite automatique de l'éclairage d'un site ponctuel mobile dans le référentiel lié au sol. Un site mobile d'atterrissage et/ou de décollage peut par exemple être situé sur une plateforme offshore, sur un navire ou plus généralement sur tout type de véhicule en mouvement par rapport au sol.

Par ailleurs, tel que décrit dans le document EP 3 231 714, il est également connu d'équiper un aéronef avec une caméra pour réaliser une acquisition d'une pluralité d'images de l'environnement extérieur à l'aéronef. Des moyens de traitement d'images permettent alors d'identifier un foyer d'expansion entre deux images pour permettre d'identifier une éventuelle déviation de l'aéronef en approche par rapport à une piste d'atterrissage et de modifier en conséquence l'orientation d'une direction de visée d'une source lumineuse d'un système d'éclairage agencé sur l'aéronef.

Cependant, de tels moyens de traitement d'images permettent de déterminer des valeurs des composantes courantes d'un vecteur vitesse de l'aéronef par rapport au sol puis d'orienter la source lumineuse en fonction de ces valeurs.

Par suite comme précédemment, un tel dispositif ne permet pas de réaliser une poursuite automatique de l'éclairage d'un site ponctuel mobile dans le référentiel lié au sol.

De plus, un tel système d'éclairage est adapté plus particulièrement pour permettre à un avion d'effectuer un éclairage lors une phase d'atterrissage sur une piste étendue et non ponctuelle.

Par ailleurs, tels que décrits notamment dans les documents FR 3 053 821 et WO 2018/035835, il est également connu d'équiper un aéronef tel un giravion ou un drone avec une caméra, des moyens de traitement d'images, une unité de calcul pour calculer des coordonnées courantes dans un référentiel lié au giravion d'au moins une zone de posé. Ces coordonnées courantes sont déterminées à partir de la pluralité d'images acquises par la caméra.

Enfin dans le document FR 3 053 821, une unité de commande permet quant à elle de générer une consigne de commande pour piloter automatiquement le giravion en direction d'une zone de posé souhaitée.

Cependant, si un tel dispositif permet de piloter automatiquement un giravion en direction d'une zone de posé avec une trajectoire de vol prédéterminée, il ne permet pas de commander l'orientation d'une source lumineuse en direction d'une zone de posé et par conséquent de réaliser un suivi automatique de cette zone de posé.

La présente invention a alors pour objet de proposer un système d'éclairage permettant de s'affranchir des limitations mentionnées ci-dessus. En effet, un but de l'invention est de réaliser l'éclairage et un suivi automatique d'un objectif de visée qui peut être mobile dans un référentiel lié au sol, tel que par exemple une plateforme offshore, un navire ou plus généralement tout véhicule en mouvement par rapport au sol.

Comme déjà évoqué, l'invention concerne un système d'éclairage directionnel configuré pour équiper un aéronef, le système d'éclairage comportant :
- au moins une source lumineuse montée sur un support motorisé, le support motorisé étant configuré pour présenter au moins un degré de mobilité en rotation par rapport à un fuselage de l'aéronef,
- un dispositif de commande permettant de commander le support motorisé selon au moins une orientation angulaire, la (ou les) orientation(s) angulaire(s) étant relative(s) à une direction de visée de la (ou les) source(s) lumineuse(s) dans un premier référentiel lié au fuselage de l'aéronef, et
- un organe de sélection pour sélectionner un objectif de visée destiné à être pointé par la direction de visée.

Selon l'invention, un tel système d'éclairage directionnel est remarquable en ce qu'il comporte :
- au moins une caméra pour acquérir une pluralité d'images de l'environnement extérieur à l'aéronef suivant la direction de visée,
- des moyens de traitement d'images pour identifier dans au moins une image, parmi la pluralité d'images, l'objectif de visée sélectionné via l'organe de sélection,
- une unité de calcul configurée pour calculer des coordonnées courantes de l'objectif de visée identifié par les moyens de traitement d'images, les coordonnées courantes étant déterminées dans le premier référentiel à partir de la pluralité d'images acquises par la (ou les) caméra(s), l'unité de calcul étant configurée pour déterminer, à partir des coordonnées courantes de l'objectif de visée, la (ou les) orientation(s) angulaire(s) dans le premier référentiel, et
- un organe d'asservissement du dispositif de commande pour asservir en position le support motorisé selon au moins la (ou les) orientation(s) angulaire(s) déterminée(s) par l'unité de calcul.

Autrement dit, l'organe de sélection permettant de sélectionner un objectif de visée peut par exemple comporter un écran de contrôle affichant une image d'une (ou plusieurs) zone(s) de posé en direction de laquelle (desquelles) l'aéronef se dirige. Un pilote de l'aéronef peut alors sélectionner l'objectif de visée en touchant avec un doigt une zone tactile de l'écran de contrôle se rapportant à la sélection de l'objectif de visée.

Un tel écran de contrôle peut par exemple être intégré au tableau de bord du cockpit de l'aéronef, être un écran portatif, tel une tablette tactile ou encore être déporté en dehors de l'aéronef lorsque celui-ci est piloté à distance et par conséquent n'embarque aucun pilote à son bord.

Par ailleurs, la (ou les) caméra(s) peut (peuvent) avantageusement être agencée(s) en dessous d'un fuselage de l'aéronef et être fixe(s) ou orientable(s) par rapport au fuselage. Cette (ou ces) caméra(s) peu(ven)t ainsi notamment être choisie(s) de type "pan-tilt-zoom" c'est-à-dire comportant d'une part deux degrés de liberté en rotation suivant un angle de site et un angle de gisement par rapport à une direction de déplacement de l'aéronef et d'autre part une capacité d'effectuer un grossissement suivant la direction de l'objectif de visée.

Les images acquises par cette (ou ces) caméra(s) sont alors transmises aux moyens de traitement d'images configurés pour identifier dans au moins une image, parmi la pluralité d'images, l'objectif de visée sélectionné via l'organe de sélection. De tels moyens de traitement d'images peuvent par exemple comporter un ordinateur, un calculateur, un processeur, un circuit intégré, un système programmable ou encore un circuit logique.

Une telle identification d'un objectif de visée sélectionné s'effectue en plusieurs étapes. Dans un premier temps, on peut procéder à une détection d'une ligne d'horizon à l'aide d'une méthode dite « par gradient ». Plus précisément, une telle méthode consiste à utiliser un « filtre de Sobel » vertical sur une image. Une telle méthode permet ainsi d'amplifier les contrastes et de détecter les lignes horizontales. Ensuite, il suffit de trouver la droite qui passe par le plus de points à l'aide d'une « transformée de Hough ». En pratique, la ligne d'horizon n'est pas tout à fait une droite mais un arc de parabole sur l'image.

Une détection approximative de la ligne d'horizon n'est cependant pas gênante puisque la détection de l'horizon ne sert qu'à éliminer la partie haute de l'image correspondant au ciel et n'est pas utile pour détecter l'objectif de visée sélectionné.

Par ailleurs, la prise en compte par les moyens de traitement de l'inclinaison de l'aéronef suivant un axe de roulis est obtenue grâce à des instruments de bord annexes permettant de connaître l'assiette de l'aéronef à tout moment et, par conséquent, de retrouver l'angle de rotation permettant de remettre l'image droite correspondant à une assiette horizontale de l'aéronef.

Une fois la ligne d'horizon identifiée et le ciel éliminé, les moyens de traitement mettent en œuvre une méthode dite « par région » telle que décrite pour une autre application dans une publication d'Arnaud Le Troter, Sébastien Mavromatis et Jean Sequeira et désignée par « Soccer field détection in video images using color and spatial coherence - International Conférence on Image Analysis and Recognition Porto, Portugal, Octobre 2004 ».

Une telle méthode par région permet alors de rechercher les couleurs dominantes d'une image ou d'une zone d'intérêt par distribution colorimétrique. Elle permet également la recherche des zones cohérentes selon un critère colorimétrique de l'image puis elle utilise un modèle d'élargissement sur les pixels de l'image. Un tel modèle est connu pour établir une reconnaissance des pixels colorés constituant des images et peut utiliser un espace de représentation des couleurs tel que celui désigné en langue française par l'acronyme « TSL » pour Teinte, Saturation, Luminosité et en langue anglaise par l'acronyme « HLS » pour Hue, Saturation Lightness.

Une telle méthode par région peut notamment permettre de détecter la mer dans une partie basse de l'image agencée en dessous de la ligne d'horizon et le ciel dans la partie haute de l'image agencée au dessus de la ligne d'horizon.

Par la suite, le regroupement des pixels restants en zones connexes permet d'obtenir les zones comprenant un (ou plusieurs) objectif(s) de visée sélectionné(s). Les zones connexes présentes uniquement dans le ciel sont retirées et correspondent généralement à des nuages, des fumées et des objets volants qui ne correspondent pas à des objectifs de visée potentiels à identifier.

La formation des zones cohérentes consiste à assigner à chaque pixel une zone dite « zone TSL » ou une absence de zone TSL si la couleur du pixel n'est dans aucune des zones dominantes TSL (ou couleurs dominantes de l'image). Ensuite, les moyens de traitement permettent de créer des zones connexes de pixels appartenant à une même zone TSL.

Le phénomène d'élargissement d'un pixel à une zone est réalisé en appliquant un outil de morphologie mathématique correspondant à une fermeture. L'élément structurant choisi pour la fermeture est un cercle de taille très inférieure aux tailles minimales de l'(ou des) objectif(s) de visée que l'on souhaite identifier dans l'image. La taille choisie de l'élément structurant est de l'ordre du dixième de celle des objets à détecter.

Les zones obtenues sont alors identifiées comme des objectifs de visée potentiels et peuvent être affichées indépendamment par les moyens d'affichage puis sélectionnées par l'équipage.

Ainsi, une fois l'objectif de visée sélectionné identifié, l'unité de calcul effectue alors le calcul des coordonnées courantes de l'objectif de visée dans le premier référentiel lié au fuselage de l'aéronef et détermine la (ou les) orientation(s) angulaire(s) dans le premier référentiel.

Une telle unité de calcul peut comme précédemment pour les moyens de traitement d'images par exemple comporter un ordinateur, un calculateur, un processeur, un circuit intégré, un système programmable ou encore un circuit logique.

En outre, les moyens de traitement d'images et l'unité de calcul peuvent être formés par des éléments distincts l'un de l'autre ou encore être confondus l'un avec l'autre formant alors par exemple un unique ordinateur.

L'organe d'asservissement permet alors à tout instant de modifier la position du support motorisé de manière à suivre la (ou les) orientation(s) angulaire(s) déterminée(s) par l'unité de calcul. En outre, le support motorisé peut avantageusement comporter deux degrés de liberté en rotation suivant un angle de site et un angle de gisement par rapport à une direction de déplacement de l'aéronef. Dans ce cas, la position du support motorisé peut être modifiée selon deux orientations angulaires distinctes et l'unité de calcul détermine, à chaque instant, une première orientation angulaire suivant un angle de site et une deuxième orientation angulaire suivant un angle de gisement.

En pratique, l'organe d'asservissement peut asservir en position le support motorisé selon la (ou les) orientation(s) angulaire(s) déterminée(s) par l'unité de calcul lorsque l'objectif de visée est sélectionné via l'organe de sélection par un pilote de l'aéronef.

Ainsi, dès qu'un objectif de visée est sélectionné par un pilote de l'aéronef, l'organe d'asservissement du dispositif de commande réalise l'asservissement en position du support motorisé selon au moins la (ou les) orientation(s) angulaire(s) déterminée(s) par l'unité de calcul.

Avantageusement, le système d'éclairage directionnel peut comporter un moyen de mesure pour mesurer des valeurs des composantes courantes d'un vecteur vitesse de l'aéronef par rapport au sol, les composantes courantes étant déterminées dans un second référentiel lié au sol.

Un tel moyen de mesure peut notamment comporter un organe de mesure de l'altitude et du cap de l'aéronef, un (ou plusieurs) accéléromètre(s) et un (plusieurs) module(s) de géolocalisation par satellite tel un module GPS.

Selon un exemple de réalisation avantageux de l'invention, l'organe d'asservissement peut asservir en position le support motorisé selon une orientation angulaire prédéterminée, l'orientation angulaire prédéterminée étant variable en fonction de l'une au moins des valeurs des composantes courantes du vecteur vitesse de l'aéronef par rapport au sol, la direction de visée de la (ou des) source(s) lumineuse(s) variant entre un angle minimal orienté vers le bas, c'est-à-dire vers le sol, par rapport à une direction d'avancement de l' aéronef et un angle maximal orienté vers le bas correspondant à une direction verticale parallèle à un troisième axe du premier référentiel.

En d'autres termes, l'organe d'asservissement permet d'asservir en position le support motorisé selon une orientation angulaire prédéterminée dont la valeur peut varier en fonction d'une (ou des) valeur(s) des composantes courantes du vecteur vitesse de l'aéronef par rapport au sol. Dans ce cas, l'aéronef comporte alors un moyen de mesure tel que décrit précédemment pour mesurer des valeurs des composantes courantes d'un vecteur vitesse.

Ainsi, lors d'une phase de vol stationnaire de l'aéronef, correspondant à des composantes courantes nulles du vecteur vitesse de l'aéronef par rapport au sol, l'organe d'asservissement permet d'asservir en position le support motorisé pour que la direction de visée de la (ou des) source(s) lumineuse(s) soit orientée vers le bas perpendiculairement à un plan formé par un axe de roulis et un axe de tangage de l'aéronef.

En revanche lors d'une phase de vol présentant des composantes courantes non nulles du vecteur vitesse de l'aéronef par rapport au sol, l'organe d'asservissement permet d'asservir en position le support motorisé pour que la direction de visée de la (ou des) source(s) lumineuse(s) soit orientée d'un angle de 3° vers le bas par rapport à la direction d'avancement et en dessous du plan formé par un axe de roulis et un axe de tangage de l'aéronef.

Avantageusement, le système d'éclairage directionnel peut comporter un organe manuel de commande pour commander à l'organe d'asservissement d'asservir en position le support motorisé selon l'orientation angulaire prédéterminée.

Autrement dit, l'organe manuel de commande peut permettre de passer d'un premier mode d'asservissement en position du support motorisé à un deuxième mode d'asservissement en position du support motorisé.

Dans le premier mode d'asservissement, le support motorisé est asservi selon la (ou les) orientation(s) angulaire(s) déterminée(s) par l'unité de calcul. En revanche dans le second mode d'asservissement, l'organe d'asservissement permet d'asservir en position le support motorisé selon l'orientation angulaire prédéterminée qui peut par exemple être mémorisée dans une unité de stockage embarquée sur l'aéronef ou dans une unité de stockage externe.

Selon un exemple de réalisation avantageux de l'invention, le système d'éclairage directionnel peut comporter un organe manuel de correction pour corriger manuellement l'orientation angulaire prédéterminée du support motorisé.

Un tel organe manuel de correction peut être formé par exemple par un "mini-manche", également désigné en langue anglaise par le terme "joystick", ou tout autre organe à commande manuelle mobile dans les deux sens selon au moins une direction ou présentant au moins un degré de mobilité en rotation en étant mobile dans les deux sens de rotation. Un tel organe manuel de correction est donc apte à corriger l'orientation angulaire prédéterminée du support motorisé suivant les deux sens du (ou des) degré(s) de mobilité qu'il possède par exemple par rapport à un élément du cockpit de l'aéronef.

Avantageusement, la (ou les) caméra(s) peu(ven)t être agencée(s) sur le support motorisé.

En d'autres termes, la (ou les) caméra(s) est (sont) mobile(s) avec la (ou les) source(s) lumineuse(s). De cette manière, la (ou les) caméras peu(ven)t suivre constamment la direction de visée de la (ou des) source(s) lumineuse(s)

En pratique, le système d'éclairage directionnel peut comporter une pluralité de sources lumineuses entourant la (ou les) caméra(s), la pluralité de sources lumineuses étant agencée coaxialement avec la (ou les) caméra(s) suivant la direction de visée.

Ainsi, le système d'éclairage peut comporter par exemple une caméra centrale et la pluralité de sources lumineuses peut être régulièrement répartie autour de cette caméra centrale. Dans ce cas, la direction de visée de l'ensemble formé par la pluralité de sources lumineuses est alors confondue avec l'orientation d'un axe optique de la caméra centrale.

En outre, cette pluralité de sources lumineuses peut être formée par des diodes électroluminescentes agencées sur un support plan et directement alimentées en énergie électrique pour générer un rayonnement lumineux.

Selon un exemple de réalisation avantageux de l'invention, la pluralité de sources lumineuses peut comporter un générateur de lumière déporté et des faisceaux de fibres optiques pour acheminer une lumière depuis le générateur de lumière à proximité de la (ou des) caméra(s).

Dans ce cas, le générateur de lumière peut être agencé sur une zone fixe de l'aéronef, cette zone fixe étant solidaire du fuselage de l'aéronef et agencée à l'extérieur du support motorisé. Ainsi les faisceaux de fibres optiques peuvent permettre d'acheminer la lumière tout autour de la caméra et au plus près de la caméra.

Un tel exemple de réalisation est avantageux car les fibres optiques présentent une souplesse intrinsèque et sont aptes à se déformer librement pour suivre les mouvements du support motorisé. De plus, de telles fibres optiques permettent d'acheminer une grande quantité de lumière sans générer de chaleur à proximité de la caméra.

La présente invention a aussi pour objet un procédé d'éclairage directionnel d'un aéronef, le procédé d'éclairage directionnel comportant au moins :
- une étape d'éclairage d'au moins une source lumineuse montée sur un support motorisé, le support motorisé présentant au moins un degré de mobilité en rotation par rapport à un fuselage de l'aéronef,
- une étape de commande permettant de commander le support motorisé selon au moins une orientation angulaire, la (ou les) orientation(s) angulaire(s) étant relative(s) à une direction de visée de la (ou les) source(s) lumineuse(s) dans un premier référentiel lié au fuselage de l'aéronef,
- une étape de sélection pour sélectionner un objectif de visée destiné à être pointé par ladite direction de visée.

Selon l'invention, le procédé d'éclairage directionnel est remarquable en ce qu'il comporte une succession d'étapes comportant au moins :
- une étape d'acquisition pour acquérir une pluralité d'images de l'environnement extérieur à l'aéronef suivant la direction de visée,
- une étape de traitement d'images pour identifier dans au moins une image, parmi la pluralité d'images, l'objectif de visée sélectionné à l'étape de sélection,
- une étape de calcul configurée pour calculer des coordonnées courantes de l'objectif de visée identifié lors de l'étape de traitement d'images, les coordonnées courantes étant déterminées dans le premier référentiel à partir de la pluralité d'images acquises lors de l'étape d'acquisition, l'étape de calcul étant configurée pour déterminer, à partir des coordonnées courantes de l'objectif de visée, la (ou les) orientation(s) angulaire(s) dans le premier référentiel, et
- une étape d'asservissement d'un dispositif mettant en œuvre l'étape de commande, l'étape d'asservissement permettant d'asservir en position le support motorisé selon au moins la (ou les) orientation(s) angulaire(s) déterminée(s) lors de l'étape de calcul.

En d'autres termes, l'étape de sélection permettant de sélectionner un objectif de visée peut par exemple être mise en œuvre au moyen d'un écran de contrôle affichant une image d'une (ou plusieurs) zone(s) de posé en direction de laquelle (desquelles) l'aéronef se dirige. L'étape de sélection peut alors être réalisée par exemple par un pilote de l'aéronef en touchant avec un doigt une zone tactile de l'écran de contrôle se rapportant à la sélection de l'objectif de visée.

L'étape d'acquisition est quant à elle mise en œuvre au moyen d'une (ou plusieurs) caméra(s) avantageusement agencée(s) en dessous d'un fuselage de l'aéronef et être fixe(s) ou orientable(s) par rapport au fuselage. Comme déjà évoqué, cette (ou ces) caméra(s) peu(ven)t ainsi notamment être de type "pan-tilt-zoom".

Les images acquises par cette (ou ces) caméra(s) sont alors transmises à des moyens de traitement d'images pour mettre en œuvre l'étape de traitement d'images. Ces moyens de traitement d'images sont en effet configurés pour identifier dans au moins une image, parmi la pluralité d'images, l'objectif de visée sélectionné lors de l'étape de sélection. De tels moyens de traitement d'images peuvent par exemple comporter un ordinateur, un calculateur, un processeur, un circuit intégré, un système programmable ou encore un circuit logique...

Lorsque l'objectif de visée sélectionné est identifié lors de l'étape de traitement d'images, une étape de calcul permet alors de calculer des coordonnées courantes de l'objectif de visée dans le premier référentiel lié au fuselage de l'aéronef et de déterminer la (ou les) orientation(s) angulaire(s) dans le premier référentiel.

Une telle étape de calcul peut comme précédemment pour l'étape de traitement d'images être mise en œuvre par exemple par un ordinateur, un calculateur, un processeur, un circuit intégré, un système programmable ou encore un circuit logique...

Comme précédemment évoqué, l'étape de traitement d'images et l'étape de calcul peuvent être mises en œuvre par des éléments distincts l'un de l'autre ou encore par des éléments confondus l'un avec l'autre formant alors par exemple un unique ordinateur.

L'étape d'asservissement permet quant à elle de modifier la position du support motorisé de manière à suivre la (ou les) orientation(s) angulaire(s) déterminée(s) lors de l'étape de calcul précédente. En outre, le support motorisé peut avantageusement comporter deux degrés de liberté en rotation suivant un angle de site et un angle de gisement par rapport à une direction de déplacement de l'aéronef. Dans ce cas, la position du support motorisé peut être modifiée selon deux orientations angulaires distinctes et l'unité de calcul détermine, à chaque instant, une première orientation angulaire suivant un angle de site et une deuxième orientation angulaire suivant un angle de gisement.

Avantageusement, le procédé d'éclairage directionnel peut comporter une étape de mesure pour mesurer des valeurs des composantes courantes d'un vecteur vitesse de l'aéronef par rapport au sol, les composantes courantes étant déterminées dans un second référentiel lié au sol.

Une telle étape de mesure peut notamment être mise en œuvre au moyen d'un organe de mesure de l'altitude et du cap de l'aéronef, un (ou plusieurs) accéléromètre(s) et un (plusieurs) module(s) de géolocalisation par satellite tel un module GPS.

Selon un exemple de réalisation avantageux de l'invention, l'étape d'asservissement peut asservir en position le support motorisé selon une orientation angulaire prédéterminée au moins avant une mise en œuvre de l'étape de sélection, l'orientation angulaire prédéterminée étant variable en fonction de l'une au moins des valeurs des composantes courantes du vecteur vitesse de l'aéronef par rapport au sol mesurées à l'étape de mesure, la direction de visée de la (ou des) source(s) lumineuse(s) variant entre un angle minimal orienté vers le bas par rapport à une direction d'avancement de l'aéronef et un angle maximal orienté vers le bas correspondant à une direction verticale parallèle à un troisième axe du premier référentiel.

Autrement dit, préalablement à l'étape de sélection par le pilote de l'objectif de visée, l'orientation angulaire prédéterminée du support motorisé peut varier automatiquement en fonction de l'une au moins des valeurs des composantes courantes du vecteur vitesse de l'aéronef par rapport au sol. Dans ce cas, un tel asservissement en position du support motorisé selon une orientation angulaire prédéterminée peut correspondre à un mode d'asservissement initial.

Avantageusement, après une mise en œuvre de l'étape de sélection, le procédé d'éclairage directionnel peut comporter une étape de commande manuelle pour commander l'étape d'asservissement permettant d'asservir en position le support motorisé selon l'orientation angulaire prédéterminée.

Autrement dit, cette étape de commande manuelle permet par exemple au pilote de l'aéronef de passer d'un premier mode d'asservissement en position du support motorisé à un deuxième mode d'asservissement en position du support motorisé. En outre, un tel deuxième mode d'asservissement peut correspondre au mode d'asservissement initial mis en œuvre préalablement au premier mode d'asservissement en position du support motorisé.

En pratique, le procédé d'éclairage directionnel peut comporter une étape de correction manuelle pour corriger manuellement l'orientation angulaire prédéterminée du support motorisé.

Ainsi, l'étape de correction manuelle peut être mise en œuvre par exemple au moyen de l'actionnement d'un "mini-manche", également désigné en langue anglaise par le terme "joystick", ou tout autre organe à commande manuelle mobile dans les deux sens selon au moins une direction ou présentant au moins un degré de mobilité en rotation en étant mobile dans les deux sens de rotation. Une telle étape de correction manuelle permet alors de corriger l'orientation angulaire prédéterminée du support motorisé suivant les deux sens du (ou des) degré(s) de mobilité qu'il possède par exemple par rapport à un élément du cockpit de l'aéronef.

L'invention et ses avantages apparaîtront avec plus de détails dans le cadre de la description qui suit avec des exemples donnés à titre illustratif en référence aux figures annexées qui représentent :
[Fig 1] la figure 1, une vue de coté d'un aéronef équipé d'un système d'éclairage directionnel conforme à l'invention,
[Fig 2] la figure 2, une vue de dessus d'un aéronef équipé d'un système d'éclairage directionnel conforme à l'invention,
[Fig 3] la figure 3, une vue de face d'une première variante d'un système d'éclairage directionnel conforme à l'invention,
[Fig 4] la figure 4, une vue de côté d'une seconde variante d'un système d'éclairage directionnel conforme à l'invention, et
[Fig 5] la figure 5, un logigramme illustrant des étapes d'un procédé d'éclairage directionnel conforme à l'invention.

Les éléments présents dans plusieurs figures distinctes sont affectés d'une seule et même référence.

Comme déjà évoqué l'invention se rapporte à un système d'éclairage directionnel destiné à équiper un aéronef.

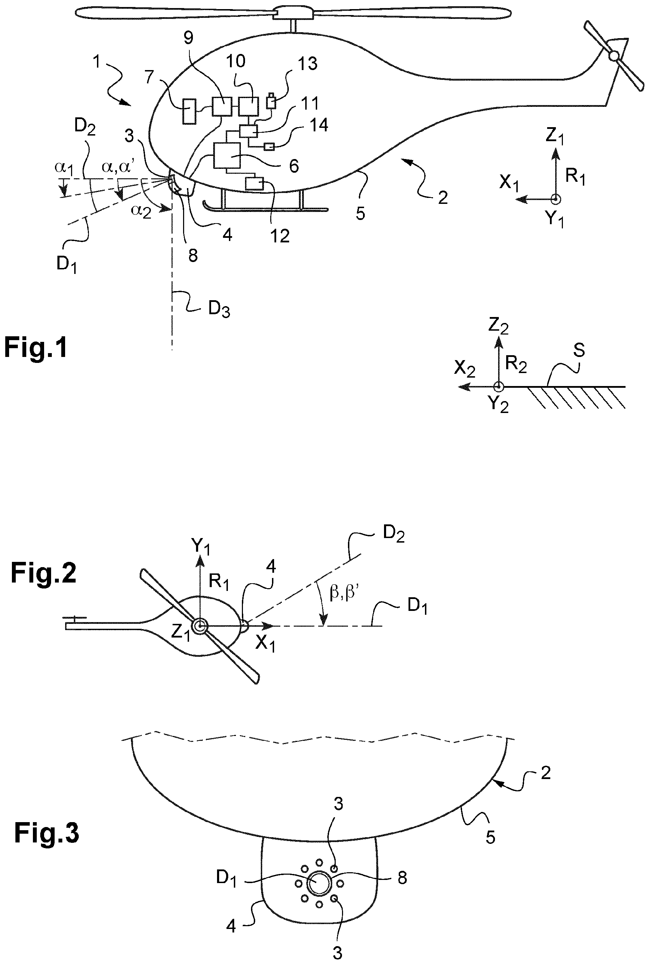

Tel que représenté à la figure 1, un tel système d'éclairage directionnel 1 peut être monté sur un aéronef 2 et permet d'éclairer une cible telle que notamment une zone d'atterrissage.

Ainsi, le système d'éclairage directionnel 1 comporte au moins une source lumineuse 3 montée sur un support motorisé 4. En outre, un tel support motorisé 4 présente au moins un degré de mobilité en rotation par rapport à un fuselage 5 de l'aéronef 2 et préférentiellement deux degrés de mobilité en rotation par rapport au fuselage 5.

Le système d'éclairage directionnel 1 comporte également un dispositif de commande 6 permettant de commander des déplacements du support motorisé 4 selon au moins une orientation angulaire, et préférentiellement selon deux orientations angulaires α, β, α', β'. Cette (ou ces) orientation(s) angulaire(s) a, β, α', β' est (sont) alors relative(s) à une direction de visée D1 de la (ou des) source(s) lumineuse(s) 3 dans un premier référentiel R1 lié audit fuselage 5 de l'aéronef 2.

Un tel référentiel R1 peut par exemple comporter un premier axe OX₁ aligné avec un axe de cap de l'aéronef 2 agencé sensiblement horizontalement et qui peut être décalé d'un angle de dérive par rapport à une direction d'avancement D2 de l'aéronef 2. Le référentiel R1 comporte alors également un deuxième axe OY₁ agencé également horizontalement en étant perpendiculaire au premier axe OX₁. Enfin, le référentiel R1 comporte un troisième axe OZ₁ agencé verticalement et donc étant perpendiculaire aux premier et deuxième axes OX₁ et OY₁.

Par ailleurs, le système d'éclairage directionnel 1 comporte un organe de sélection 7 permettant à un pilote de l'aéronef de sélectionner un objectif de visée qui doit être pointé par la (ou des) source(s) lumineuse(s) 3 et donc par la direction de visée D1.

Tel que représenté, le système d'éclairage directionnel 1 comporte au moins une caméra 8 montée également sur le support motorisé 4 et permettant d'acquérir une pluralité d'images de l'environnement extérieur à l'aéronef 2 suivant la direction de visée D1.

Des moyens de traitement d'images 9 agencés sur l'aéronef 2 permettent alors d'identifier dans au moins une image, parmi les images acquises par la caméra 8, l'objectif de visée sélectionné via l'organe de sélection 7.

Une unité de calcul 10, qui peut également être agencée sur l'aéronef 2, est alors configurée pour calculer des coordonnées courantes de l'objectif de visée identifié par les moyens de traitement d'images 9. De telles coordonnées courantes sont alors déterminées dans le premier référentiel R1 à partir des images acquises par la caméra 8. Par suite, cette unité de calcul 10 est configurée pour déterminer, à partir des coordonnées courantes de l'objectif de visée, l'orientation angulaire α dans le premier référentiel R1.

En outre, le système d'éclairage directionnel 1 comporte aussi un organe d'asservissement 11 du dispositif de commande 6 permettant d'asservir en position le support motorisé 4 selon l'orientation angulaire α déterminée par l'unité de calcul 10.

Par ailleurs tel que représenté, le système d'éclairage directionnel 1 comporte un moyen de mesure 12 agencé sur l'aéronef 2 permettant de mesurer des valeurs des composantes courantes d'un vecteur vitesse de l'aéronef 2 par rapport au sol S, ces composantes courantes étant déterminées dans un second référentiel R2 lié au sol S.

Un tel référentiel R2 peut par exemple comporter un premier axe OX₂ agencé sensiblement horizontalement et orienté selon une première direction. Le référentiel R2 comporte alors également un deuxième axe OY₂ agencé également horizontalement en étant perpendiculaire au premier axe OX₂. Enfin, le référentiel R2 comporte un troisième axe OZ₂ agencé verticalement et donc étant perpendiculaire aux premier et deuxième axes OX₂ et OY₂.

Avantageusement, le système d'éclairage directionnel 1 peut également comporter un organe manuel de commande 13 qui peut par exemple être agencé sur l'aéronef 2 ou bien être déporté au sol. Un tel organe manuel de commande 13 permet alors de commander à l'organe d'asservissement 11 d'asservir en position le support motorisé 4 selon une orientation angulaire prédéterminée α'. Une telle orientation angulaire prédéterminée α' est alors potentiellement distincte de l'orientation angulaire α déterminée par l'unité de calcul 10 dans le premier référentiel R1.

En outre, une telle orientation angulaire prédéterminée α' peut être variable en fonction de l'une au moins des valeurs des composantes courantes du vecteur vitesse de l'aéronef 2 par rapport au sol S. Dans ce cas, la direction de visée D1 de la source lumineuse 3 peut alors varier entre un angle minimal α₁ orienté vers le bas, c'est-à-dire vers le sol, par rapport à une direction d'avancement D2 de l'aéronef 2 et un angle maximal α₂ orienté vers le bas correspondant à une direction verticale D3 parallèle au troisième axe OZ₁ du premier référentiel R1.

Par ailleurs tel que représenté, le système d'éclairage directionnel 1 peut aussi comporter un organe manuel de correction 14 permettant si nécessaire de corriger manuellement l'orientation angulaire prédéterminée α' du support motorisé 4.

Tel que représenté à la figure 2, l'organe d'asservissement 11 permet d'asservir en position le support motorisé 4 selon une orientation angulaire β déterminée par l'unité de calcul 10 ou encore selon une orientation angulaire prédéterminée β'. Une telle orientation angulaire prédéterminée β' peut alors être potentiellement distincte de l'orientation angulaire β déterminée par l'unité de calcul 10 dans le premier référentiel R1.

Avantageusement, les orientations angulaires prédéterminées α', β' peuvent être directement fonction des valeurs des composantes courantes du vecteur vitesse de l'aéronef 2 par rapport au sol S et donc par rapport au repère R2.

Plus précisément, l'orientation angulaire prédéterminée β' peut être fonction des valeurs des composantes horizontales Vx et Vy du vecteur vitesse de l'aéronef 2 selon le premier axe OX₂ et le deuxième axe OY₂ tandis que l'orientation angulaire prédéterminée α' peut être fonction de la valeur d'une composante verticale Vz du vecteur vitesse de l'aéronef 2 selon un troisième axe OZ₂.

En outre, lorsque les composantes horizontales Vx et Vy du vecteur vitesse de l'aéronef 2 sont nulles et que la composante verticale Vz selon le troisième axe OZ₂ dépasse une valeur de seuil prédéterminée Vzs, l'orientation angulaire prédéterminée α' peut alors être maintenue égale à l'angle maximal α₂. Une telle valeur de seuil prédéterminée Vzs peut par exemple être choisie négative et par exemple comprise entre -0,5. et -2.

Autrement dit, la composante verticale Vz selon le troisième axe OZ₂ peut être limitée vers le haut à une valeur de seuil prédéterminée négative de façon à ce que le phare pointe vers le bas en vol stationnaire. Une telle valeur de seuil prédéterminée Vzs peut donc par exemple être comprise entre -0,5. et -2.

Par ailleurs tel que représenté à la figure 3, un tel système d'éclairage directionnel 1 peut comporter une pluralité de sources lumineuses 3 entourant une caméra 8 et étant agencées sur le support motorisé 4. Ces sources lumineuses 3 forment alors avantageusement un ensemble monolithique agencé coaxialement avec la caméra 8 suivant la direction de visée D1.

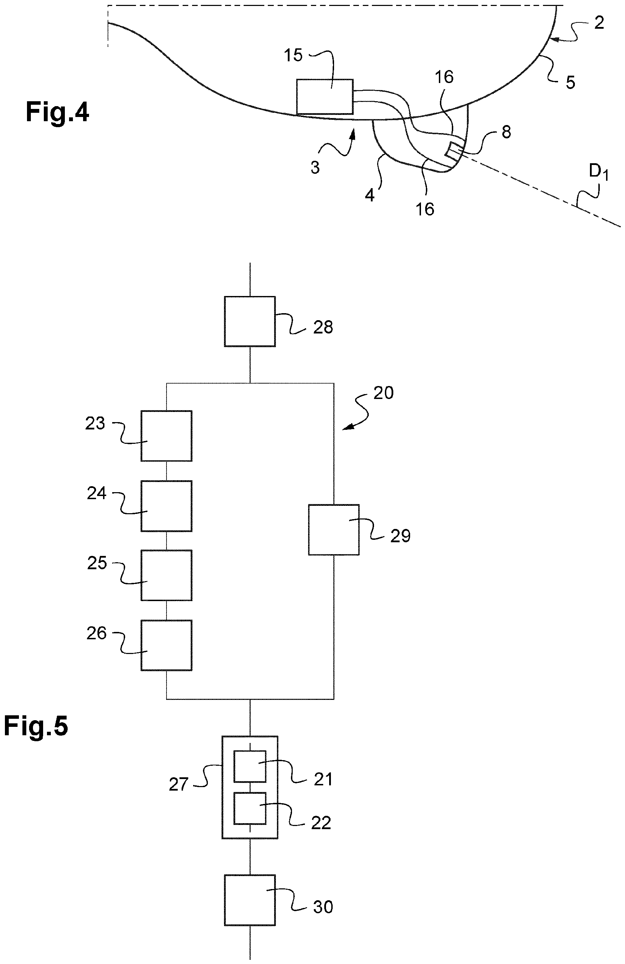

Comme illustré à la figure 4, la pluralité de sources lumineuses 3 peut également comporter un générateur de lumière 15 déporté à l'extérieur du support motorisé 4. Un tel générateur de lumière 15 peut par exemple être solidaire du fuselage 5 de l'aéronef 2. La pluralité de sources lumineuses 3 comporte également des faisceaux de fibres optiques 16 permettant alors d'acheminer une lumière depuis le générateur de lumière 15 autour de la caméra 8 agencée sur le support motorisé 4.

Tel que représenté à la figure 5 et comme déjà évoqué, l'invention se rapporte également à un procédé d'éclairage directionnel 20 d'un aéronef 2.

En outre, un tel procédé d'éclairage directionnel 20 peut avantageusement comporter une étape de mesure 28 permettant de mesurer des valeurs des composantes courantes d'un vecteur vitesse de l'aéronef 2 par rapport au sol S. Ces composantes courantes sont alors déterminées dans le second référentiel R2 lié au sol S.

Le procédé d'éclairage directionnel 20 peut comporter ensuite en parallèle une succession d'étapes 23, 24, 25 et 26 correspondant à un premier mode de fonctionnement ou une étape 29 correspondant à un deuxième mode de fonctionnement.

Ainsi dans le premier mode de fonctionnement, une étape de sélection 23 permet à au moins un pilote de l'aéronef 2 de sélectionner un objectif de visée destiné à être pointé par une direction de visée D1 correspondant à l'orientation d'une source lumineuse 3 dans un premier référentiel R1 lié au fuselage 5 de l'aéronef 2.

Ensuite, une étape d'acquisition 24 est réalisée par au moins une caméra 8 et permet d'acquérir une pluralité d'images de l'environnement extérieur à l'aéronef 2 suivant la direction de visée D1.

Le procédé d'éclairage directionnel 20 comporte également une étape de traitement d'images 25 pour identifier dans au moins une image, parmi la pluralité d'images, l'objectif de visée sélectionné à l'étape de sélection 23. Enfin, une étape de calcul 26 est configurée pour calculer des coordonnées courantes de l'objectif de visée identifié lors de l'étape de traitement d'images 25. En outre, de telles coordonnées courantes sont déterminées dans le premier référentiel R1 à partir de la pluralité d'images acquises lors de l'étape d'acquisition 24.

Par ailleurs, l'étape de calcul 26 est configurée pour déterminer, à partir des coordonnées courantes de l'objectif de visée, au moins une orientation angulaire α, β d'un support motorisé 4 dans le premier référentiel R1, la source lumineuse 3 étant montée sur ce support motorisé 4. En outre, un tel support motorisé 4 présente au moins un degré de mobilité en rotation par rapport à un fuselage 5 de l'aéronef 2.

Enfin dans ce premier mode de fonctionnement, le procédé d'éclairage directionnel 20 comporte une étape d'asservissement 27 d'un dispositif de commande 6 mettant en œuvre une étape d'éclairage 21 de la source lumineuse 3 et une étape de commande 22 permettant de commander le support motorisé 4 selon au moins une orientation angulaire α, β, α', β' relative à la direction de visée D1.

Ainsi dans ce premier mode de fonctionnement, une telle étape d'asservissement 27 permet d'asservir en position le support motorisé 4 selon l'orientation angulaire α, β déterminée lors de l'étape de calcul 26.

Par ailleurs, le procédé d'éclairage directionnel 20 peut également comporter un deuxième mode de fonctionnement dans lequel l'étape d'asservissement 27 permet d'asservir en position le support motorisé 4 selon une orientation angulaire prédéterminée α', β' qui peut avantageusement être variable en fonction des valeurs des composantes courantes d'un vecteur vitesse de l'aéronef 2 par rapport au sol S.

Cette orientation angulaire prédéterminée α', β' peut alors être distincte de l'orientation angulaire α, β déterminée lors de l'étape de calcul 26 correspondant au premier mode de fonctionnement.

En outre, pour engager le deuxième mode de fonctionnement, le procédé d'éclairage directionnel 20 peut alors comporter une étape de commande manuelle 29 pour configurer l'étape d'asservissement 27 de manière à asservir en position le support motorisé 4 selon une orientation angulaire prédéterminée α', β'.

Enfin, un tel procédé d'éclairage directionnel 20 peut comporter avantageusement une étape de correction manuelle 30 de manière à corriger manuellement l'orientation angulaire prédéterminée α', β' du support motorisé 4.

## Revendications

1. Système d'éclairage directionnel (1) configuré pour équiper un aéronef (2), ledit système d'éclairage directionnel (1) comportant :
• au moins une source lumineuse (3) montée sur un support motorisé (4), ledit support motorisé (4) présentant, à l'état installé, au moins un degré de mobilité en rotation par rapport à un fuselage (5) dudit aéronef (2),
• un dispositif de commande (6) permettant de commander ledit support motorisé (4) selon au moins une orientation angulaire (α, β, α', (3'), ladite au moins une orientation angulaire (α, β, α', (3') étant relative à une direction de visée (D1) de ladite au moins une source lumineuse (3) dans un premier référentiel (R1) lié audit fuselage (5) dudit aéronef (2),
• un organe de sélection (7) pour sélectionner un objectif de visée destiné à être pointé par ladite direction de visée (D1),
**caractérisé en ce que** ledit système d'éclairage directionnel (1) comporte :
• au moins une caméra (8) pour acquérir une pluralité d'images de l'environnement extérieur audit aéronef (2) suivant ladite direction de visée (D1),
• des moyens de traitement d'images (9) pour identifier dans au moins une image, parmi ladite pluralité d'images, ledit objectif de visée sélectionné via ledit organe de sélection (7),
• une unité de calcul (10) configurée pour calculer des coordonnées courantes dudit objectif de visée identifié par lesdits moyens de traitement d'images (9), lesdites coordonnées courantes étant déterminées dans ledit premier référentiel (R1) à partir de ladite pluralité d'images acquises par ladite au moins une caméra (8), ladite unité de calcul (10) étant configurée pour déterminer, à partir desdites coordonnées courantes dudit objectif de visée, ladite au moins une orientation angulaire (α, β) dans ledit premier référentiel (R1), et
• un organe d'asservissement (11) dudit dispositif de commande (6) pour asservir en position ledit support motorisé (4) selon au moins ladite au moins une orientation angulaire (α, β) déterminée par ladite unité de calcul (10).

2. Système selon la revendication 1, **caractérisé en ce que** ledit organe d'asservissement (11) asservit en position ledit support motorisé (4) selon ladite au moins une orientation angulaire (α, β) déterminée par ladite unité de calcul (10) lorsque ledit objectif de visée est sélectionné via ledit organe de sélection (7) par un pilote dudit aéronef.

3. Système selon l'une quelconque des revendications 1 à 2, **caractérisé en ce que** ledit système d'éclairage directionnel (1) comporte un moyen de mesure (12) pour mesurer des valeurs des composantes courantes d'un vecteur vitesse dudit aéronef (2) par rapport au sol (S), lesdites composantes courantes étant déterminées dans un second référentiel (R2) lié au sol (S).

4. Système selon la revendication 3, **caractérisé en ce que** ledit organe d'asservissement (11) asservit en position ledit support motorisé (4) selon une orientation angulaire prédéterminée (α', β'), ladite orientation angulaire prédéterminée (α', β') étant variable en fonction de l'une au moins desdites valeurs des composantes courantes dudit vecteur vitesse dudit aéronef (2) par rapport au sol (S), ladite direction de visée (D1) de ladite au moins une source lumineuse (3) variant entre un angle minimal (α₁) orienté vers le bas par rapport à une direction d'avancement (D2) dudit aéronef (2) et un angle maximal (α₂) orienté vers le bas correspondant à une direction verticale (D3) parallèle à un troisième axe OZ₁ dudit premier référentiel R1.

5. Système selon la revendication 4, **caractérisé en ce que** ledit système d'éclairage directionnel (1) comporte un organe manuel de commande (13) pour commander audit organe d'asservissement (11) d'asservir en position ledit support motorisé (4) selon ladite orientation angulaire prédéterminée (α', β') .

6. Système selon l'une quelconque des revendications 4 à 5, **caractérisé en ce que** ledit système d'éclairage directionnel (1) comporte un organe manuel de correction (14) pour corriger manuellement ladite orientation angulaire prédéterminée (α', (3') dudit support motorisé (4).

7. Système selon l'une quelconque des revendications 1 à 6, **caractérisé en ce que** ladite au moins une caméra (8) est agencée sur ledit support motorisé (4).

8. Système selon la revendication 7, **caractérisé en ce que** ledit système d'éclairage directionnel (1) comporte une pluralité de sources lumineuses (3) entourant ladite au moins une caméra (8), ladite pluralité de sources lumineuses (3) étant agencée coaxialement avec ladite au moins une caméra (8) suivant ladite direction de visée (D1).

9. Système selon la revendication 8, **caractérisé en ce que** ladite pluralité de sources lumineuses (3) comporte un générateur de lumière (15) déporté et des faisceaux de fibres optiques (16) pour acheminer une lumière depuis ledit générateur de lumière (15) à proximité de ladite au moins une caméra (8).

10. Procédé d'éclairage directionnel (20) d'un aéronef (2), ledit procédé d'éclairage directionnel (20) comportant au moins :
• une étape d'éclairage (21) d'au moins une source lumineuse (3) montée sur un support motorisé (4), ledit support motorisé (4) présentant au moins un degré de mobilité en rotation par rapport à un fuselage (5) dudit aéronef (2),
• une étape de commande (22) permettant de commander ledit support motorisé (4) selon au moins une orientation angulaire (α, β, α', β'), ladite au moins une orientation angulaire (α, β, α', β') étant relative à une direction de visée (D1) de ladite au moins une source lumineuse (3) dans un premier référentiel (R1) lié audit fuselage (5) dudit aéronef (2),
• une étape de sélection (23) pour sélectionner un objectif de visée destiné à être pointé par ladite direction de visée (D1),
**caractérisé en ce que** ledit procédé d'éclairage directionnel (20) comporte une succession d'étapes comportant au moins :
• une étape d'acquisition (24) pour acquérir une pluralité d'images de l'environnement extérieur audit aéronef (2) suivant ladite direction de visée (D1),
• une étape de traitement d'images (25) pour identifier dans au moins une image, parmi ladite pluralité d'images, ledit objectif de visée sélectionné à ladite étape de sélection (23),
• une étape de calcul (26) configurée pour calculer des coordonnées courantes dudit objectif de visée identifié lors de ladite étape de traitement d'images (25), lesdites coordonnées courantes étant déterminées dans ledit premier référentiel (R1) à partir de ladite pluralité d'images acquises lors de ladite étape d'acquisition (24), ladite étape de calcul (26) étant configurée pour déterminer, à partir des coordonnées courantes dudit objectif de visée, ladite au moins une orientation angulaire (α, β) dans ledit premier référentiel (R1), et
• une étape d'asservissement (27) d'un dispositif de commande (6) mettant en œuvre ladite étape de commande (22), ladite étape d'asservissement (27) permettant d'asservir en position ledit support motorisé (4) selon au moins ladite au moins une orientation angulaire (α, β) déterminée lors de l'étape de calcul (26).

11. Procédé selon la revendication 10, **caractérisé en ce que** ledit procédé d'éclairage directionnel (20) comporte une étape de mesure (28) pour mesurer des valeurs des composantes courantes d'un vecteur vitesse dudit aéronef (2) par rapport au sol (S), lesdites composantes courantes étant déterminées dans un second référentiel (R2) lié au sol (S).

12. Procédé selon la revendication 11, **caractérisé en ce que** ladite étape d'asservissement (27) asservit en position ledit support motorisé (4) selon une orientation angulaire prédéterminée (α', β') au moins avant une mise en œuvre de ladite étape de sélection (23), ladite orientation angulaire prédéterminée (α', β') étant variable en fonction de l'une au moins desdites valeurs des composantes courantes dudit vecteur vitesse dudit aéronef (2) par rapport au sol (S) mesurées à ladite étape de mesure (28), ladite direction de visée (D1) de ladite au moins une source lumineuse (3) variant entre un angle minimal (α₁) orienté vers le bas par rapport à une direction d'avancement (D2) dudit aéronef (2) et un angle maximal (α₂) orienté vers le bas correspondant à une direction verticale (D3) parallèle à un troisième axe OZ₁ dudit premier référentiel R1.

13. Procédé selon la revendication 12, **caractérisé en ce que**, après une mise en œuvre de ladite étape de sélection (23), ledit procédé d'éclairage directionnel (20) comporte une étape de commande manuelle (29) pour commander ladite étape d'asservissement (27) permettant d'asservir en position ledit support motorisé (4) selon ladite orientation angulaire prédéterminée (α', β').

14. Procédé selon l'une quelconque des revendications 12 à 13, **caractérisé en ce que** ledit procédé d'éclairage directionnel (20) comporte une étape de correction manuelle (30) pour corriger manuellement ladite orientation angulaire prédéterminée (α', β') dudit support motorisé (4).

## Patentansprüche

1. Richtungsbeleuchtungssystem (1), das konfiguriert ist, um ein Flugzeug (2) auszurüsten, wobei das Richtungsbeleuchtungssystem (1) umfasst:
• mindestens eine Lichtquelle (3), die auf einem motorisierten Träger (4) montiert ist, wobei der motorisierte Träger (4) im eingebauten Zustand mindestens einen Freiheitsgrad der Drehung relativ zu einem Rumpf (5) des Flugzeugs (2) aufweist,
• eine Steuervorrichtung (6) zum Steuern des motorisierten Trägers (4) gemäß mindestens einer Winkelausrichtung (α, β, α', β'), wobei die mindestens eine Winkelausrichtung (α, β, α', β') auf eine Zielrichtung (D1) der mindestens einen Lichtquelle (3) in einem mit dem Rumpf (5) des Flugzeugs (2) verbundenen ersten Bezugssystem (R1) bezogen ist,
• ein Auswahlelement (7) zum Auswählen eines Zielobjekts, das durch die genannte Zielrichtung (D1) anvisiert werden soll,
**dadurch gekennzeichnet, dass** das Richtungsbeleuchtungssystem (1) umfasst:
• mindestens eine Kamera (8) zum Erfassen einer Mehrzahl von Bildern der Umgebung außerhalb des Flugzeugs (2) entlang der Zielrichtung (D1),
• Bildverarbeitungsmittel (9) zum Identifizieren des über das Auswahlelement (7) ausgewählten Zielobjekts in mindestens einem Bild aus der Mehrzahl von Bildern,
• eine Recheneinheit (10), die konfiguriert ist, um aktuelle Koordinaten des durch die Bildverarbeitungsmittel (9) identifizierten Zielobjekts zu berechnen, wobei die aktuellen Koordinaten in dem ersten Bezugssystem (R1) aus der von der mindestens einen Kamera (8) erfassten Mehrzahl von Bildern bestimmt werden, wobei die Recheneinheit (10) konfiguriert ist, um aus den aktuellen Koordinaten des Zielobjekts die mindestens eine Winkelausrichtung (α, β) in dem ersten Bezugssystem (R1) zu bestimmen, und
• ein Servoelement (11) der Steuervorrichtung (6) zur Servosteuerung der Position des motorisierten Trägers (4) gemäß mindestens der mindestens einen durch die Recheneinheit (10) bestimmten Winkelausrichtung (α, β).

2. System nach Anspruch 1, **dadurch gekennzeichnet, dass** das Servoelement (11) den motorisierten Träger (4) gemäß der von der Recheneinheit (10) bestimmten mindestens einen Winkelausrichtung (α, β) positionsmäßig servosteuert, wenn das Zielobjekt über das Auswahlelement (7) von einem Piloten des Flugzeugs ausgewählt wird.

3. System nach einem der Ansprüche 1 bis 2,
**dadurch gekennzeichnet, dass** das Richtungsbeleuchtungssystem (1) Messmittel (12) zum Messen von aktuellen Werten der Komponenten eines Geschwindigkeitsvektors des Flugzeugs (2) relativ zum Boden (S) umfasst, wobei die aktuellen Komponenten in einem mit dem Boden (S) verbundenen zweiten Bezugssystem (R2) bestimmt werden.

4. System nach Anspruch 3, **dadurch gekennzeichnet, dass** das Servoelement (11) den motorisierten Träger (4) in einer vorgegebenen Winkelausrichtung (α', β') positionssteuert, wobei die vorgegebene Winkelausrichtung (α', β') in Abhängigkeit von mindestens einem der aktuellen Werte der Komponenten des Geschwindigkeitsvektors des Flugzeugs (2) in Bezug auf den Boden (S) variabel ist, wobei die Zielrichtung (D1) der mindestens einen Lichtquelle (3) zwischen einem minimalen Winkel (α₁), der in Bezug auf eine Vorwärtsrichtung (D2) des Flugzeugs (2) nach unten orientiert ist, und einem maximalen Winkel (α₂) variiert, der nach unten orientiert ist und einer zu einer dritten Achse OZ₁ des ersten Bezugssystems R1 parallelen vertikalen Richtung (D3) entspricht.

5. System nach Anspruch 4, **dadurch gekennzeichnet, dass** das Richtungsbeleuchtungssystem (1) ein manuelles Befehlseingabeelement (13) umfasst, um dem Servoelement (11) zu befehlen, die Position des motorisierten Trägers (4) gemäß der vorgegebenen Winkelausrichtung (α', β') servozusteuern.

6. System nach einem der Ansprüche 4 bis 5, **dadurch gekennzeichnet, dass** das Richtungsbeleuchtungssystem (1) ein manuelles Korrekturelement (14) zum manuellen Korrigieren der vorgegebenen Winkelausrichtung (α', β') des motorisierten Trägers (4) umfasst.

7. System nach einem der Ansprüche 1 bis 6, **dadurch gekennzeichnet, dass** die mindestens eine Kamera (8) auf dem motorisierten Träger (4) angeordnet ist.

8. System nach Anspruch 7, **dadurch gekennzeichnet, dass** das Richtungsbeleuchtungssystem (1) eine Mehrzahl von Lichtquellen (3) umfasst, die die mindestens eine Kamera (8) umgeben, wobei die Mehrzahl von Lichtquellen (3) koaxial zu der mindestens einen Kamera (8) entlang der Zielrichtung (D1) angeordnet ist.

9. System nach Anspruch 8, **dadurch gekennzeichnet, dass** die Mehrzahl von Lichtquellen (3) einen entfernten Lichterzeuger (15) und optische Faserbündel (16) zur Übertragung von Licht von dem Lichterzeuger (15) in die Nähe der mindestens einen Kamera (8) umfasst.

10. Verfahren zum Richtungsbeleuchten (20) von einem Flugzeug (2), wobei das Verfahren zum Richtungsbeleuchten (20) mindestens umfasst:
• einen Schritt des Leuchtens (21) mit mindestens einer Lichtquelle (3), die auf einem motorisierten Träger (4) montiert ist, wobei der motorisierte Träger (4) mindestens einen Freiheitsgrad der Drehung in Bezug auf einen Rumpf (5) des Flugzeugs (2) aufweist,
• Steuerschritt (22), der es ermöglicht, den motorisierten Träger (4) gemäß mindestens einer Winkelausrichtung (α, β, α', β') zu steuern, wobei die mindestens eine Winkelausrichtung (α, β, α', β') auf eine Zielrichtung (D1) der mindestens einen Lichtquelle (3) in einem mit dem Rumpf (5) des Flugzeugs (2) verbundenen ersten Bezugssystem (R1) bezogen ist,
• einen Auswahlschritt (23) zum Auswählen eines Zielobjekts, das durch die Zielrichtung (D1) anvisiert werden soll,
**dadurch gekennzeichnet, dass** das Verfahren zum Richtungsbeleuchten (20) eine Folge von Schritten umfasst, die mindestens umfassen:
• einen Erfassungsschritt (24) zum Erfassen einer Mehrzahl von Bildern der Umgebung außerhalb des Flugzeugs (2) entlang der Sichtrichtung (D1),
• einen Bildverarbeitungsschritt (25) zum Identifizieren des in dem Auswahlschritt (23) ausgewählten Zielobjekts in mindestens einem Bild aus der Mehrzahl von Bildern,
• einen Rechenschritt (26), der konfiguriert ist, um aktuelle Koordinaten des in dem Bildverarbeitungsschritt (25) identifizierten Zielobjekts zu berechnen, wobei die aktuellen Koordinaten in dem ersten Bezugssystem (R1) aus der Mehrzahl der in dem Erfassungsschritt (24) erfassten Bilder bestimmt werden, wobei der Rechenschritt (26) konfiguriert ist, um aus den aktuellen Koordinaten des Zielobjekts die mindestens eine Winkelausrichtung (α, β) in dem ersten Bezugssystem (R1) zu bestimmen, und
• einen Schritt (27) des Servosteuerns einer Steuervorrichtung unter Verwendung des Steuerschritts (22), wobei der Schritt des Servosteuerns ein Steuern der Position des motorisierten Trägers (4) in Abhängigkeit von mindestens der mindestens einen während des Rechenschritts (26) bestimmten Winkelausrichtung (α, β)ermöglicht.

11. Verfahren nach Anspruch 10, **dadurch gekennzeichnet, dass** das Richtbeleuchtungsverfahren (20) einen Messschritt (28) zur Messung von aktuellen Werten der Komponenten eines Geschwindigkeitsvektors des Flugzeugs (2) in Bezug auf den Boden (S) umfasst, wobei die aktuellen Komponenten in einem zweiten Bezugssystem (R2) bestimmt werden, das mit dem Boden (S) verbunden ist.

12. Verfahren nach Anspruch 11, **dadurch gekennzeichnet, dass** der Schritt des Servosteuerns (27) den motorisierten Träger (4) gemäß einer vorgegebenen Winkelausrichtung (α', β') zumindest vor der Durchführung des Auswahlschritts (23) positionsservosteuert, wobei die vorgegebene Winkelausrichtung (α', β') in Abhängigkeit von mindestens einem der in dem Messschritt (28) gemessenen aktuellen Werte der Komponenten des Geschwindigkeitsvektors des Flugzeugs (2) relativ zum Boden (S) variabel ist, wobei die Zielrichtung (D1) der mindestens einen Lichtquelle (3) zwischen einem minimalen Winkel (α₁), der in Bezug auf eine Vorwärtsrichtung (D2) des Flugzeugs (2) nach unten orientiert ist, und einem maximalen Winkel (α₂), der nach unten orientiert ist und einer zu einer dritten Achse OZ₁ des ersten Bezugssystems R1 parallelen vertikalen Richtung (D3) entspricht, variiert.

13. Verfahren nach Anspruch 12, **dadurch gekennzeichnet, dass** nach der Durchführung des Auswahlschrittes (23) das Richtbeleuchtungsverfahren (20) einen manuellen Befehlseingabeschritt (29) zur Steuerung des Schritts des Servosteuerns (27) umfasst, der es ermöglicht, die Position des motorisierten Träger (4) gemäß der vorgegebenen Winkelausrichtung (α', β') servozusteuern.

14. Verfahren nach einem der Ansprüche 12 bis 13, **dadurch gekennzeichnet, dass** das Richtbeleuchtungsverfahren (20) einen manuellen Korrekturschritt (30) zum manuellen Korrigieren der vorgegebenen Winkelausrichtung (α', β') des motorisierten Trägers (4) umfasst.

## Claims

1. Directional lighting system (1) which is configured to equip an aircraft (2), the directional lighting system (1) including:
• at least one light source (3) mounted on a motorised support (4), the motorised support (4) having, in the installed state, at least one degree of mobility in terms of rotation relative to a fuselage (5) of the aircraft (2),
• a control device (6) which enables the motorised support (4) to be controlled in accordance with at least one angular orientation (α, β, α', β'), the at least one angular orientation (α, β, α', β') being relative to a target direction (D1) of the at least one light source (3) in a first reference system (R1) associated with the fuselage (5) of the aircraft (2),
• a selection member (7) for selecting a target objective which is intended to be pointed by the target direction (D1),
**characterised in that** the directional lighting system (1) includes:
• at least one camera (8) for acquiring a plurality of images of the external environment with respect to the aircraft (2) in accordance with the target direction (D1),
• image processing means (9) for identifying, in at least one image from the plurality of images, the target objective selected via the selection member (7),
• a calculation unit (10) which is configured to calculate current coordinates of the target objective identified by the image processing means (9), the current coordinates being determined in the first reference system (R1) from the plurality of images acquired by the at least one camera (8), the calculation unit (10) being configured to determine, from the current coordinates of the target objective, the at least one angular orientation (α, β) in the first reference system (R1), and
• a control member (11) of the control device (6) for controlling the motorised support (4) in terms of position in accordance with the at least one angular orientation (α, β) determined by the calculation unit (10).

2. System according to claim 1, **characterised in that** the control member (11) controls the motorised support (4) in terms of position in accordance with the at least one angular orientation (α, β) determined by the calculation unit (10) when the target objective is selected via the selection member (7) by a pilot of the aircraft.

3. System according to either claim 1 or 2, **characterised in that** the directional lighting system (1) includes a measurement means (12) for measuring values of the current components of a speed vector of the aircraft (2) relative to the ground (S), the current components being determined in a second reference system (R2) associated with the ground (S).

4. System according to claim 3, **characterised in that** the control member (11) controls the motorised support (4) in terms of position in accordance with a predetermined angular orientation (α', β'), the predetermined angular orientation (α', β') being variable in accordance with at least one of the current component values of the speed vector of the aircraft (2) relative to the ground (S), the target direction (D1) of the at least one light source (3) varying between a minimum angle (α₁) orientated in a downward direction relative to an advance direction (D2) of the aircraft (2) and a maximum angle (α₂) orientated in a downward direction corresponding to a vertical direction (D3) parallel with a third axis OZ₁ of the first reference system R1.

5. System according to claim 4, **characterised in that** the directional lighting system (1) includes a manual control member (13) for instructing the control member (11) to control the motorised support (4) in terms of position in accordance with the predetermined angular orientation (α', β').

6. System according to any one of claims 4 to 5, **characterised in that** the directional lighting system (1) includes a manual correction member (14) for manually correcting the predetermined angular orientation (α', β') of the motorised support (4).

7. System according to any one of claims 1 to 6, **characterised in that** the at least one camera (8) is arranged on the motorised support (4).

8. System according to claim 7, **characterised in that** the directional lighting system (1) includes a plurality of light sources (3) which surround the at least one camera (8), the plurality of light sources (3) being arranged coaxially with the at least one camera (8) in accordance with the target direction (D1).

9. System according to claim 8, **characterised in that** the plurality of light sources (3) includes an offset light generator (15) and optical fibre bundles (16) in order to route a light from the light generator (15) close to the at least one camera (8).

10. Directional lighting method (20) of an aircraft (2), the directional lighting method (20) including at least:
• a lighting step (21) of at least one light source (3) mounted on a motorised support (4), the motorised support (4) having at least one degree of mobility in terms of rotation relative to a fuselage (5) of the aircraft (2),
• a control step (22) which enables the motorised support (4) to be controlled in accordance with at least one angular orientation (α, β, α', β'), the at least one angular orientation (α, β, α', β') being relative to a target direction (D1) of the at least one light source (3) in a first reference system (R1) associated with the fuselage (5) of the aircraft (2),
• a selection step (23) for selecting a target objective which is intended to be pointed by the target direction (D1),
**characterised in that** the directional lighting method (20) comprises a succession of steps comprising at least:
• an acquisition step (24) for acquiring a plurality of images of the external environment with respect to the aircraft (2) in accordance with the target direction (D1),
• an image processing step (25) for identifying in at least one image from the plurality of images the target objective selected at the selection step (23),
• a calculation step (26) which is configured to calculate current coordinates of the target objective identified during the image processing step (25), the current coordinates being determined in the first reference system (R1) from the plurality of images acquired during the acquisition step (24), the calculation step (26) being configured to determine, from the current coordinates of the target objective, the at least one angular orientation (α, β) in the first reference system (R1), and
• a control step (27) of a control device (6) which implements the control step (22), the control step (27) enabling the motorised support (4) to be controlled in terms of position in accordance with the at least one angular orientation (α, β) determined during the calculation step (26).

11. Method according to claim 10, **characterised in that** the directional lighting method includes a measurement step (28) for measuring values of the current components of a speed vector of the aircraft (2) relative to the ground (S), the current components being determined in a second reference system (R2) associated with the ground (S).

12. Method according to claim 11, **characterised in that** the control step (27) controls the motorised support (4) in terms of position in accordance with a predetermined angular orientation (α', β') at least before an implementation of the selection step (23), the predetermined angular orientation (α', β') being variable in accordance with at least one of the current component values of the speed vector of the aircraft (2) relative to the ground (S) measured during the measuring step (28), the target direction (D1) of the at least one light source (3) varying between a minimum angle (α₁) orientated in a downward direction relative to an advance direction (D2) of the aircraft (2) and a maximum angle (α₂) orientated in a downward direction corresponding to a vertical direction (D3) parallel with a third axis OZ₁ of the first reference system R1.

13. Method according to claim 12, **characterised in that**, after an implementation of the selection step (23), the directional lighting method (20) includes a manual control step (29) for controlling the control step (27), enabling the motorised support (4) to be controlled in terms of position in accordance with the predetermined angular orientation (α', β').

14. Method according to either claim 12 or 13, **characterised in that** the directional lighting method (20) includes a manual correction step (30) for manually correcting the predetermined angular orientation (α', β') of the motorised support (4).
